# EUROPÄISCHE PATENTSCHRIFT

(11) **EP 4 397 540 B1**
(45) Veröffentlichungstag und Bekanntmachung des Hinweises auf die Patenterteilung: **02.04.2025**
(21) Anmeldenummer: 23150508.2
(22) Anmeldetag: 05.01.2023
(51) Int. Cl.: B60P 1/44

(54) **VORRICHTUNG ZUM VERLADEN VON LASTEN**
DEVICE FOR LOADING LOADS
DISPOSITIF DE CHARGEMENT DE CHARGES

(43) Veröffentlichungstag der Anmeldung: 10.07.2024
(73) Patentinhaber: Bischoff, Thomas, 76297 Stutensee (DE)
(72) Erfinder: Bischoff, Thomas, 76297 Stutensee (DE)
(74) Vertreter: Christ, Niko

(56) Entgegenhaltungen:
- DE-A1- 19 529 353
- GB-A- 373 164
- US-A- 4 285 416

## Beschreibung

Die vorliegende Erfindung betrifft eine Vorrichtung zum Verladen von Lasten, umfassend eine erste Plattform, die mittels einer an einem Fahrzeug befestigbaren Hubvorrichtung anhebbar ist und eine mit der ersten Plattform verbundene zweite Plattform, die durch Schwenkarme von einer oberen Position in eine untere Position schwenkbar ist, wobei die zweite Plattform in der oberen Position beabstandet über der ersten Plattform angeordnet ist und in der unteren Position die erste Plattform und die zweite Plattform eine gemeinsame Ebene ausbilden.

Eine solche Vorrichtung ist bereits aus der US 4,285,416 A vorbekannt. Weiter sei auf GB 373164 A, sowie DE 19529353 A1 verwiesen.

Ferner sind ähnliche Vorrichtungen zum Anheben von Lasten in ein Fahrzeug ebenfalls vorbekannt. In der CH 509 894 A ist eine Ladevorrichtung vorgesehen, die an einem Fahrzeug angebracht ist und die eine Gabel oder eine Plattform aufweist, um Lasten in das Fahrzeug zu befördern. Diese Vorrichtung dient vorzugsweise dazu, Behälter zu verladen, sie kann allerdings auch zum Laden von Stückgütern eingesetzt werden. In der EP 0 300 766 B1 ist ein Lift für ein Fahrzeugheck beschrieben, mit welchem Lasten in dieses hineintransportiert werden können. Der Lift für das Fahrzeugheck umfasst dabei eine Plattform, welche mit einem Mittel zum Anheben und Absenken zwischen Erdbodenniveau und Fahrzeugbodenniveau bewegt werden kann. Vorzugsweise ist das Mittel zum Anheben und Absenken als Teleskoparm ausgebildet. In der DE 25 45 546 A1 ist ebenfalls ein Hecklift beschrieben, welcher eine Hubladebühne eines Lkw aufweist, die sich für ein leichteres Be- und Entladen von Frachtgut auf das Fahrbahnniveau absenken lässt.

Allerdings sind die vorstehend beschriebenen Vorrichtungen nicht idealerweise dafür geeignet, Lasten in Fahrzeuge zu verladen, da sie viel Platz einnehmen und deswegen zum Verladen von sperrigen und schweren Gegenständen eingesetzt werden. Auch eignen sich diese Lösungen nicht dazu, Lasten Platz sparend direkt am Fahrzeug anzubringen und dort zu transportieren.

Vor diesem Hintergrund liegt der vorliegenden Erfindung die Aufgabe zugrunde, eine Vorrichtung zu schaffen, die es ermöglicht, in einfacher Weise Lasten an einem Fahrzeug zu verstauen, dabei platzsparend ist und mit deren Hilfe mehrere Lasten gleichzeitig befördert werden können. Die Vorrichtung soll vorzugsweise eingesetzt werden, wenn der Innenraum des Fahrzeugs nicht genügend Platz bietet, um Lasten zu verstauen.

Dies gelingt durch eine Vorrichtung zum Verladen von Lasten gemäß den Merkmalen des unabhängigen Anspruchs 1. Weitere sinnvolle Ausgestaltungen können den sich anschließenden abhängigen Ansprüchen entnommen werden.

Erfindungsgemäß ist eine Vorrichtung zum Verladen von Lasten vorgesehen, umfassend eine erste Plattform, die mittels einer an einem Fahrzeug befestigbaren Hubvorrichtung anhebbar ist und eine mit der ersten Plattform verbundene zweite Plattform, die durch Schwenkarme von einer oberen Position in eine untere Position schwenkbar ist, wobei die zweite Plattform in der oberen Position beabstandet über der ersten Plattform angeordnet ist und in der unteren Position die erste Plattform und die zweite Plattform eine gemeinsame Ebene ausbilden.

Lasten, wie Zweiräder, Quads, Ersatzreifen und Stückgut können über die erfindungsgemäße Vorrichtung angehoben werden und in ein mit der Vorrichtung verbundenes Fahrzeug verladen werden. Jedoch ist es dadurch auch möglich, die Lasten auch außen am Fahrzeug zu lagern und zu halten. Die Vorrichtung ist hauptsächlich aus zwei Plattformen und einer Hubvorrichtung aufgebaut, wobei es die Plattformen jeweils erlauben, je ein Zweirad daran unverlierbar zu verzurren. Eine Plattform ist an Schwenkarmen beweglich befestigt, wobei die Schwenkarme an der Hubvorrichtung angelenkt sind. So sind zwei Plattformen vorgesehen, welche zwischen einer oberen Position der Schwenkarme, in welcher die erste Plattform und die zweite Plattform übereinander angeordnet sind und einer unteren Position, in welcher beide Plattformen nebeneinander angeordnet sind und eine gemeinsame Ebene bilden, verschwenkbar sind. Beide Plattformen sind ihrerseits über die Hubvorrichtung zwischen dem Erdbodenniveau und einem erhöhten Niveau, vorzugsweise dem Fahrzeugbodenniveau, anhebbar. Die obere Position ist sehr platzsparend, da mehrere Lasten gleichzeitig auf der ersten Plattform und der zweiten Plattform gelagert sein können. Die Plattformen liegen übereinander und nehmen somit in der Position vom Fahrzeug weg weniger Raum ein als in der unteren Position der Schwenkarme. In der unteren Position der Schwenkarme bilden die beiden Plattformen eine Ebene aus. Diese Position eignet sich besonders gut, um Lasten auf die Plattformen zu schieben und die Konstruktion als herkömmlichen Lift zu benutzen. So können mehrere Lasten gleichzeitig auf eine oder auf zwei Plattformen geschoben werden.

In konkreter Ausführung sind erfindungsgemäß der ersten Plattform erste Befestigungsmittel und der zweiten Plattform zweite Befestigungsmittel zugeordnet, wobei die Schwenkarme wenigstens zwei Schienenelemente umfassen, welche in ersten Befestigungspunkten an den ersten Befestigungsmitteln der ersten Plattform und in zweiten Befestigungspunkten an den zweiten Befestigungsmitteln der zweiten Plattform angelenkt sind, wobei die ersten Befestigungspunkte der Schienenelemente eines Schwenkarms in einem gleichen Abstand übereinander angeordnet sind wie die zweiten Befestigungspunkte. Somit kann jeder Schwenkarm aus wenigstens zwei Schienenelementen bestehen, welche an Befestigungspunkten an der ersten und zweiten Plattform befestigt sind. Die Schienenelemente können in einer solchen Weise an den Befestigungspunkten angelenkt sein, dass sie während der Bewegung der Schwenkarme zwischen der oberen und der unteren Position die zweite Plattform stets waagerecht gehalten sind. Bei gleicher Kontur der Schienenelemente befinden sich jeweils die ersten und die zweiten Befestigungspunkte im selben Abstand. In diesem Fall können die Lasten sicher vor einem Absturz während des Ladevorgangs bewahrt werden, da die Plattform nicht kippen kann.

Jeweils ein Schienenelement kann innerhalb eines Schwenkarms eine Dämpfungsrolle zum Anschlag des jeweils anderen Schienenelements in der oberen Position der zweiten Plattform aufweisen. Eine Dämpfungsrolle zum Anschlag des jeweils anderen Schienenelements kann bewirken, dass die Schwenkarme eine gleichförmige Bewegung zwischen der oberen und der unteren Position ausführen, in der die zweite Plattform weniger stark vibrieren kann. In der Endposition schlagen die Schwenkarme dann, etwa während der Fahrt, nicht aneinander und die Position wird in der Endlage einseitig definiert. In der Endlage werden die Plattformen zudem über Bolzen und Spanner mechanisch gesichert. Das Verfahren der Plattformen kann manuell durch Handkraft in Form einer Seilwinde oder eines Flaschenzugs oder elektrisch, pneumatisch oder hydraulisch erfolgen. Im Falle eines automatischen Verfahrens kann die Bewegung über eine Fernsteuerung ausgelöst werden.

Bevorzugtermaßen können die Schienenelemente innerhalb eines Schwenkarms jeweils eine identische Bogenkontur aufweisen. Wenn jeweils zwei Schienenelemente mit jeweils identischer Bogenkontur vorliegen, und die Schienenelemente an ersten und zweiten Befestigungspunkten an der ersten Plattform und an den Befestigungsmitteln der zweiten Plattform befestigt sind, haben die ersten und zweiten Befestigungspunkte während der Bewegung der Schwenkarme von der oberen Position in die untere Position stets den gleichen Abstand übereinander und die zweite Plattform kann nicht kippen.

Die Hubvorrichtung kann ein Verbindungsmittel aufweisen, welches an einem Liftträger des Fahrzeugs anbringbar ist. Dieses Verbindungmittel ist vorzugsweise als Hubrahmen ausgebildet. Der Hubrahmen kann als Laser-Kantteil oder Rohrkonstruktion ausgeführt sein und am Heck eines Fahrzeugs, vorzugsweise eines Wohnwagens oder Wohnmobils befestigt werden. Das Verbindungsmittel kann zur Befestigung einer Hubvorrichtung und eines Portalrahmen dienen. Besonders bevorzugt ist eine Ausführung, bei der die dritte Metallstütze eine profilierte L- Form aufweist. Durch dieses Profil ist eine optimale Stützung des Portalrahmens gegeben. Andere Verbindungsmittel sind ebenfalls denkbar, wie ein Metallständer oder eine andere Vorrichtung, die an einem Fahrzeug, vorzugsweise an dessen Heck, stabil befestigt werden kann. Das Verbindungsmittel kann zur Befestigung der Hubvorrichtung an dem Fahrzeug eingesetzt werden.

In konkreter Ausführung kann die Hubvorrichtung einen Portalrahmen umfassen. Ein Portalrahmen kann an dem Verbindungselement befestigt sein und als Befestigungsstütze für die Hubvorrichtung dienen, da am Portalrahmen eine Linearführung angeordnet sein kann, an welcher die erste Plattform und die zweite Plattform angehoben und abgesenkt werden können. Eine weitere Option ist der Einsatz von zwei parallelen Trägern, welche ebenfalls eine stabile Befestigungsmethode für die Hubvorrichtung darstellen würden.

Der Portalrahmen kann eine Linearführung zum Anheben der ersten Plattform aufweisen. Eine Geradführung oder Linearführung ist ein mechanisches Führungselement, mit dessen Hilfe ein Bauteil gegen ein anderes Bauteil, oft das Maschinengestell, auf einer Geraden bewegt werden kann.

Bevorzugtermaßen kann die Linearführung als Schienenführung ausgebildet sein, vorzugsweise als ein Paar von relativ gegeneinander verschiebbaren Zahn-, Profil- oder Teleskopschienen. Als Linearführung sind Schienenführungen besonders geeignet. Paare von relativ gegeneinander verschiebbaren Schienen sind geeignet, um die erste Plattform und die zweite Plattform gleichzeitig anzuheben. Alle möglichen gegeneinander verschiebbaren Profile sind denkbar. So kann ein Teil der Schienenführung auch einen U- oder C-förmigen Querschnitt aufweisen, durch welchen eine weitere Schiene geführt werden kann. Die Betätigung kann wiederum über hydraulische oder pneumatische, ebenso wie über elektrische Hebemittel, insbesondere Zylinder oder Spindeln, erfolgen.

In konkreter Ausführung kann wenigstens ein Befestigungsmittel zur Befestigung eines Zweirads auf der ersten Plattform und/oder der zweiten Plattform angeordnet sein. Zur sicheren Lagerung und zum sicheren Anheben von Lasten auf der ersten Plattform und der zweiten Plattform können Befestigungsmittel auf den Plattformen vorhanden sein. Vorzugsweise sind die Befestigungsmittel als Spannriemen ausgebildet. Diese können beim Einladen um das Zweirad gelegt werden, so dass das Zweirad gegen das Herunterfallen beim Verladeprozess gesichert ist. Bei einem Transport der Lasten auf den übereinander gelagerten Plattformen können die Spannriemen beibehalten werden um die Position der Lasten auch während des Transports zu fixieren.

Die erste Plattform kann mithilfe der Hubvorrichtung in die Ebene einer Fahrzeugladefläche anhebbar sein. Über die Hubvorrichtung können Fahrräder, Motorräder, E-Bikes und andere Lasten vom Erdboden zur Fahrzeugladefläche angehoben werden und im Innerraum des Fahrzeugs verstaut werden, sofern sie während des Transports nicht auf den Plattformen verbleiben sollen.

Die vorstehend beschriebene Erfindung wird im Folgenden anhand eines Ausführungsbeispiels näher erläutert.

Es zeigen
- Figur 1: eine am Heck eines Fahrzeugs befestigte Vorrichtung zum Anheben von Lasten in perspektivischer Ansicht,
- Figur 2: eine Vorrichtung gemäß Figur 1 in unterer Position der ersten Plattform und der zweiten Plattform in seitlicher Draufsicht, sowie
- Figur 3: die Vorrichtung gemäß Figur 2 in unterer Position der ersten Plattform und oberer Position der zweiten Plattform in seitlicher Draufsicht

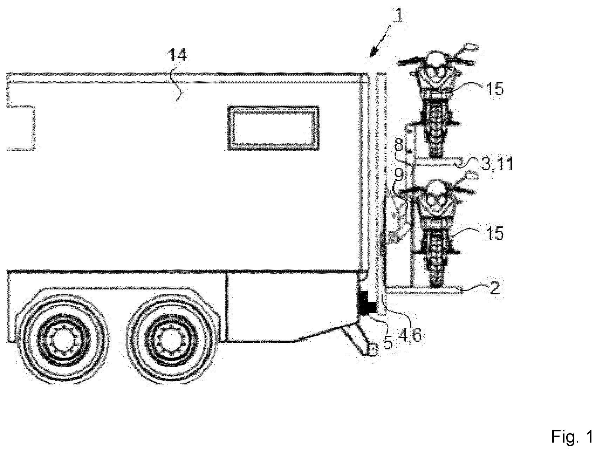

Figur 1 zeigt eine an einem Fahrzeug montierte Vorrichtung zum Anheben von Lasten in perspektivischer Ansicht. Diese umfasst eine erste Plattform 2 und eine zweite Plattform 3. Die erste Plattform 2 und die zweite Plattform 3 lassen sich mit einer Hubvorrichtung 4 anheben. Die zweite Plattform 3 ist an zwei Schwenkarmen 8 befestigt, welche ihrerseits an der Hubvorrichtung 4 angelenkt sind. Die Schwenkarme 8 können die zweite Plattform 3 von der Vorrichtung nach außen weg und nach unten schwenken und gleichzeitig die zweite Plattform 3 waagrecht halten, da jeder Schwenkarm 8 aus jeweils zwei Schienenelementen 9 besteht, welche an unterschiedlichen jedoch übereinander liegenden Befestigungspunkten an der der Hubvorrichtung 4 und der zweiten Plattform 3 schwenkbar befestigt sind. Zwei Schienenelemente 9 enthalten jeweils eine Dämpfungsrolle 10, welche zwischen diesen und den jeweils benachbarten Schienenelementen 9 angeordnet ist und zum Anschlag des jeweils anderen Schienenelements 9 in der oberen Position der Schwenkarme 8 dient. Die Hubvorrichtung 4 kann gerade an einer Linearführung 7 nach oben und unten verfahren werden und die erste Plattform 2 sowie die zweite Plattform 3 anheben und absenken. So ist es möglich, Motorräder 15, Zweiräder und andere Lasten auf der ersten Plattform 2 oder der zweiten Plattform 3 anzuheben. Die Linearführung 7 ist an einem Portalrahmen 6 angebracht. Der Portalrahmen 6 dient zur Befestigung der Hubvorrichtung 4 und als Längsführung für dessen vertikales Verfahren.

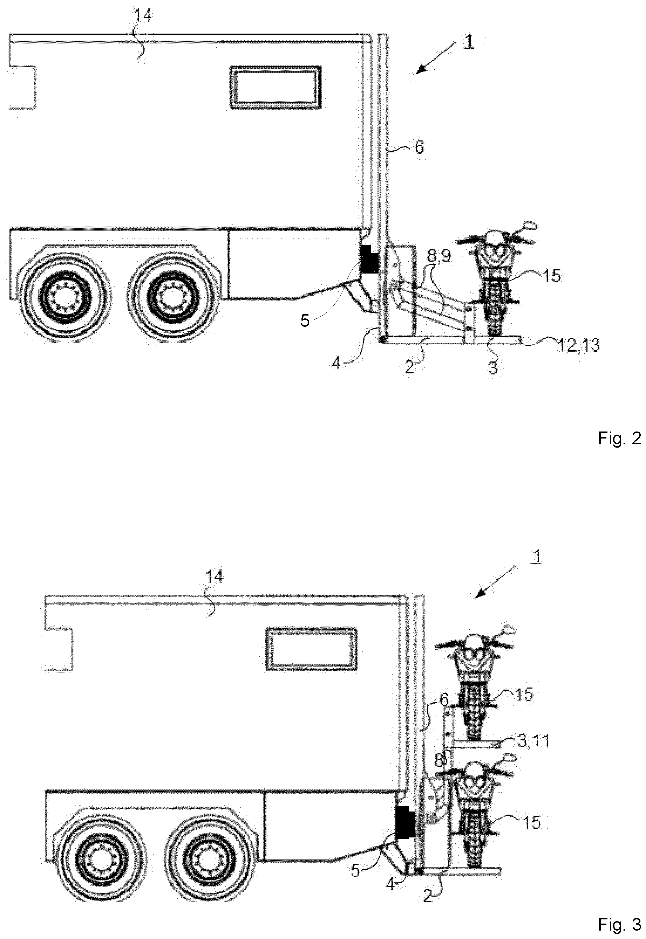

In Figur 2 ist die Vorrichtung zum Anheben von Lasten gemäß Figur 1 in einer herabgelassenen, ausgeschwenkten Position gezeigt. Die erste Plattform 2 und die zweite Plattform 3 befinden sich in der unteren Position 12 der Schwenkarme 8. In der unteren Position 12 der Schwenkarme 8 ist die zweite Plattform 3 hinter der ersten Plattform 2 angeordnet, so dass die beiden Plattformen 2 und 3 eine gemeinsame Ebene 13 ausbilden. Die erste Plattform 2 und die zweite Plattform 3 sind über die Hubvorrichtung 4 in Erdbodennähe abgesenkt, so dass die Beladung der Plattformen 2 und 3 aus dieser Funktionsstellung leicht möglich ist.

In Figur 3 ist die obere Position 11 der Schwenkarme 8 gezeigt, in welcher sich die zweite Plattform 3 beabstandet über derjenigen der ersten Plattform 2 befindet. Ist ein erstes Zweirad zunächst auf der zweiten Plattform 3 verladen worden, so befindet es sich nun oberhalb der ersten Plattform 2. Die erste Plattform 2 kann nun in Bodenhöhe ebenfalls leicht erreicht werden und ein Zweirad kann auch dort aufgestellt und fixiert werden. Die obere Position der zweiten Plattform 3 ist besonders platzsparend, da auf diese Weise beide Plattformen beladen sein können, aber nur wenig vom Fahrzeug abstehen. Die erste Plattform 2 und die zweite Plattform 3 können dadurch gleichzeitig beladen sein, so dass mehr als ein Zweirad gleichzeitig auf der Vorrichtung transportiert werden kann.

In Figur 1 ist die Vorrichtung in einer oberen Position auch der ersten Plattform 2 gezeigt, die sich wie bereits die zweite Plattform 3 nun ebenfalls in ihrer oberen Position 11 befindet. Dies gelingt durch eine Linearführung 7, mit welcher die beiden Plattformen 2 und 3 gleichzeitig senkrecht angehoben werden können.

Vorstehend beschrieben ist eine Vorrichtung die es ermöglicht, in einfacher Weise Lasten an einem Fahrzeug zu verstauen, dabei platzsparend ist und mit deren Hilfe mehrere Lasten gleichzeitig befördert werden können. Die Vorrichtung soll vorzugsweise dann eingesetzt werden, wenn der Innenraum des Fahrzeugs nicht genügend Platz bietet.

### BEZUGSZEICHENLISTE

- 1: Vorrichtung
- 2: Erste Plattform
- 3: Zweite Plattform
- 4: Hubvorrichtung
- 5: Verbindungelement
- 6: Portalrahmen
- 7: Linearführung
- 8: Schwenkarm
- 9: Schienenelement
- 10: Dämpfungsrolle
- 11: Obere Position
- 12: Untere Position
- 13: Ebene
- 14: Fahrzeug
- 15: Motorrad

## Patentansprüche

1. Vorrichtung zum Verladen von Lasten, umfassend eine erste Plattform (2), die mittels einer an einem Fahrzeug (14) befestigbaren Hubvorrichtung (4) anhebbar ist und eine mit der ersten Plattform (2) verbundene zweite Plattform (3), die durch Schwenkarme (8) von einer oberen Position (11) in eine untere Position (12) schwenkbar ist, wobei die zweite Plattform (3) in der oberen Position (11) beabstandet über der ersten Plattform (2) angeordnet ist und in der unteren Position (12) die erste Plattform (2) und die zweite Plattform (3) eine gemeinsame Ebene (13) ausbilden,
wobei der ersten Plattform (2) erste Befestigungsmittel und der zweiten Plattform (3) zweite Befestigungsmittel zugeordnet sind, wobei die Schwenkarme (8) wenigstens zwei Schienenelemente (9) umfassen, welche in ersten Befestigungspunkten an den ersten Befestigungsmitteln der ersten Plattform (2) und in zweiten Befestigungspunkten an den zweiten Befestigungsmitteln der zweiten Plattform (3) angelenkt sind,
**dadurch gekennzeichnet, dass** die ersten Befestigungspunkte der Schienenelemente (9) eines Schwenkarms (8) in einem gleichen Abstand übereinander angeordnet sind wie die zweiten Befestigungspunkte.

2. Vorrichtung gemäß Anspruch 1, **dadurch gekennzeichnet, dass** jeweils ein Schienenelement (9) innerhalb eines Schwenkarms (8) eine Dämpfungsrolle (10) zum Anschlag des jeweils anderen Schienenelements (9) in der oberen Position (11) der zweiten Plattform (3) aufweist.

3. Vorrichtung gemäß einem der vorgenannten Ansprüche, **dadurch gekennzeichnet, dass** die Schienenelemente (9) innerhalb eines Schwenkarms (8) jeweils eine identische Bogenkontur aufweisen.

4. Vorrichtung gemäß einem der vorgenannten Ansprüche, **dadurch gekennzeichnet, dass** die Hubvorrichtung (4) ein Verbindungsmittel (5) aufweist, welches an einem Liftträger des Fahrzeugs (14) anbringbar ist.

5. Vorrichtung gemäß einem der vorgenannten Ansprüche, **dadurch gekennzeichnet, dass** die Hubvorrichtung (4) einen Portalrahmen (6) umfasst.

6. Vorrichtung gemäß Anspruch 5, **dadurch gekennzeichnet, dass** der Portalrahmen (6) eine Linearführung (7) zum Anheben der ersten Plattform (2) aufweist.

7. Vorrichtung gemäß Anspruch 6, **dadurch gekennzeichnet, dass** die Linearführung (7) als Schienenführung ausgebildet ist, vorzugsweise als ein Paar von relativ gegeneinander verschiebbaren Zahn-, Profil- oder Teleskopschienen.

8. Vorrichtung gemäß einem der vorgenannten Ansprüche, **dadurch gekennzeichnet, dass** wenigstens ein Befestigungsmittel zur Befestigung einer Last auf der ersten Plattform (2) und/oder der zweiten Plattform (3) angeordnet ist.

9. Vorrichtung gemäß einem der vorgenannten Ansprüche, **dadurch gekennzeichnet, dass** die erste Plattform (2) mit Hilfe der Hubvorrichtung (4) in die Ebene (12) einer Fahrzeugladefläche anhebbar ist.

## Claims

1. Device for loading loads, comprising a first platform (2), which can be lifted by means of a lifting device (4) that can be fastened to a vehicle (14), and a second platform (3), which is connected to the first platform (2) and can be pivoted from an upper position (11) to a lower position (12) by pivot arms (8), the second platform (3) being arranged at a distance above the first platform (2) in the upper position (11) and the first platform (2) and the second platform (3) forming a common level (13) in the lower position (12),
the first platform (2) being assigned first fastening means and the second platform (3) being assigned second fastening means, the pivot arms (8) comprising at least two rail elements (9) which are articulated at first fastening points to the first fastening means of the first platform (2) and at second fastening points to the second fastening means of the second platform (3),
**characterized in that** the first fastening points of the rail elements (9) of a pivot arm (8) are arranged one above the other at the same distance as the second fastening points.

2. Device according to claim 1, **characterized in that** each rail element (9) within a pivot arm (8) comprises a damping roller (10) for stopping the other rail element (9) in the upper position (11) of the second platform (3).

3. Device according to either of the preceding claims, **characterized in that** the rail elements (9) within a pivot arm (8) each have an identical curved contour.

4. Device according to any of the preceding claims, **characterized in that** the lifting device (4) has a connecting means (5) which can be attached to a lift carrier of the vehicle (14).

5. Device according to any of the preceding claims, **characterized in that** the lifting device (4) comprises a portal frame (6).

6. Device according to claim 5, **characterized in that** the portal frame (6) comprises a linear guide (7) for lifting the first platform (2).

7. Device according to claim 6, **characterized in that** the linear guide (7) is designed as a rail guide, preferably as a pair of toothed, profiled or telescopic rails which can be displaced relative to one another.

8. Device according to any of the preceding claims, **characterized in that** at least one fastening means for fastening a load is arranged on the first platform (2) and/or the second platform (3).

9. Device according to any of the preceding claims, **characterized in that** the first platform (2) can be lifted onto the level (12) of a vehicle loading area by means of the lifting device (4).

## Revendications

1. Dispositif pour le chargement de charges, comprenant une première plate-forme (2) qui peut être soulevée au moyen d'un dispositif de levage (4) pouvant être fixé à un véhicule (14) et une seconde plate-forme (3) reliée à la première plate-forme (2) et pouvant pivoter au moyen de bras pivotants (8) d'une position supérieure (11) à une position inférieure (12), dans lequel la seconde plate-forme (3) est disposée à distance au-dessus de la première plate-forme (2) dans la position supérieure (11) et la première plate-forme (2) et la seconde plate-forme (3) forment un plan commun (13) dans la position inférieure (12),
dans lequel des premiers moyens de fixation sont associés à la première plate-forme (2) et des seconds moyens de fixation sont associés à la seconde plate-forme (3), dans lequel les bras pivotants (8) comprennent au moins deux éléments formant rails (9) qui sont articulés en des premiers points de fixation sur les premiers moyens de fixation de la première plate-forme (2) et en des seconds points de fixation sur les seconds moyens de fixation de la seconde plate-forme (3),
**caractérisé en ce que** les premiers points de fixation des éléments formant rails (9) d'un bras pivotant (8) sont disposés à la même distance les uns au-dessus des autres que les seconds points de fixation.

2. Dispositif selon la revendication 1, **caractérisé en ce que** respectivement un élément formant rail (9) présente, à l'intérieur d'un bras pivotant (8), un galet amortisseur (10) pour bloquer l'autre élément formant rail (9) respectif dans la position supérieure (11) de la seconde plate-forme (3).

3. Dispositif selon l'une des revendications précédentes,
**caractérisé en ce que** les éléments formant rails (9) présentent respectivement un contour d'arc identique à l'intérieur d'un bras pivotant (8).

4. Dispositif selon l'une des revendications précédentes,
**caractérisé en ce que** le dispositif de levage (4) présente un moyen de liaison (5) pouvant être monté sur un support de levage du véhicule (14).

5. Dispositif selon l'une des revendications précédentes,
**caractérisé en ce que** le dispositif de levage (4) comprend un portique (6).

6. Dispositif selon la revendication 5, **caractérisé en ce que** le portique (6) présente un guidage linéaire (7) permettant de soulever la première plate-forme (2).

7. Dispositif selon la revendication 6, **caractérisé en ce que** le guidage linéaire (7) est conçu comme un guidage à rails, de préférence comme une paire de rails dentés, profilés ou télescopiques pouvant être déplacés l'un par rapport à l'autre.

8. Dispositif selon l'une des revendications précédentes,
**caractérisé en ce qu'**au moins un moyen de fixation pour la fixation d'une charge est disposé sur la première plate-forme (2) et/ou la seconde plate-forme (3).

9. Dispositif selon l'une des revendications précédentes,
**caractérisé en ce que** la première plate-forme (2) peut être soulevée à l'aide du dispositif de levage (4) dans le plan (12) d'une surface de chargement de véhicule.
